Europäisches Patentamt

European Patent Office

Office européen des brevets

(11) Publication number: **0 306 283 B1**

# EUROPEAN PATENT SPECIFICATION

(45) Date of publication of patent specification: **29.12.93**  (51) Int. Cl.5: **G06F 15/76**, G06F 15/16

(21) Application number: **88308044.2**

(22) Date of filing: **31.08.88**

(54) **Data routing in processor arrays.**

(30) Priority: **03.09.87 GB 8720715**

(43) Date of publication of application:
**08.03.89 Bulletin 89/10**

(45) Publication of the grant of the patent:
**29.12.93 Bulletin 93/52**

(84) Designated Contracting States:
**AT BE CH DE ES FR GB GR IT LI LU NL SE**

(56) References cited:

**PROCEEDINGS OF THE 3RD INTERNATIONAL WORKSHOP ON PARALLEL PROCESSING BY CELLULAR AUTOMATA AND ARRAYS, Berlin, 9th - 11th September 1986, pages 11-29, Berlin, DE; P.M. FLANDERS et al.: "Data organisation for the effective use of processor arrays"**

**IEEE TRANSACTIONS ON COMPUTERS, vol. C-31, no. 9, September 1982, pages 809-819, IEEE, New York, US; P.M. FLANDERS: "A unified approach to a class of data movements on an array processor"**

(73) Proprietor: **CAMBRIDGE PARALLEL PROCESSING LIMITED**
**Centennial Court**
**Easthampstead Road**
**Bracknell RG12 1JA(GB)**

(72) Inventor: **Flanders, Peter Michael**
**65 Emmbrook Vale**
**Wokingham Berkshire, RG11 5PW(GB)**

(74) Representative: **Rackham, Stephen Neil et al**
**GILL JENNINGS & EVERY,**
**Broadgate House,**
**7 Eldon Street**
**London EC2M 7LH (GB)**

**Description**

The present invention relates to methods of operating processor arrays, and in particular to the problem of finding efficient methods of routing data within the array to achieve a desired data ordering.

The need to change data from one ordering to another arises in a variety of technical processes. For example in image processing the use of Fast Fourier Transforms (FFT's) results in data being output in "Bit Reversed" order, e.g. after processing eight data elements numbered 0 - 7 are output in the order
(04261537)
It is normally necessary to re-order the data into the natural sequence
(01234567)
before further processing is carried out. (It should be noted that in the above sequences the numbers are not themselves the data but rather indices indicating the position in the data sequence from which the data element originated).

When data is stored in a simple "1-dimensional" device such as a conventional RAM then the choice of a suitable method for reordering the data is comparatively straightforward. The device itself constrains the ways in which data can be moved so that only a limited number of methods are possible and selection of the optimum, most time-efficient, method is comparatively simple. However, when the data is stored in a multi-dimensional device such as an array processor the number of different ways in which the data can be routed to achieve the desired ordering is greatly increased. Moreover since in general data moves with different speeds in the different dimensions assessing the relative costs in terms of time taken for different routing methods becomes extremely difficult.

In general therefore data re-ordering has been achieved using sub-optimum routing methods chosen in accordance with the ease with which they can be programmed and/or "Rule of Thumb" criteria which imperfectly reflect the actual time cost of different routings.

The present inventor's 1982 paper cited below discusses the use of mapping vectors which represent a certain sub-set of possible data movements in a multi-dimensional processor array. The paper describes how a transformation sequence comprising a movement of data in the array corresponding to an operation on elements of a mapping vector is generated.

According to the present invention as claimed there is provided a method of operating a processor array system comprising reading an initial mapping vector defining an initial ordering of data in the array, reading a final mapping vector defining a desired ordering of data in the array, generating a transformation sequence, each step of the transformation sequence corresponding to a movement of data in the array corresponding to an operation on elements of a mapping vector, and executing a transformation sequence, characterised in that the processor array system comprises a host processor and a processor array and the host processor reads the initial and final mapping vectors, determines whether each mapping vector is a static mapping vector having a known value or a dynamic mapping vector having a value to be determined subsequently, in the case that the initial and final mapping vectors are both static mapping vectors generates at least two mapping vector transformation sequences, costs the transformation sequences according to the time the corresponding data movement would take, identifies the transformation sequence of least cost, and generates instructions to the processor array to execute the sequence of least cost, and in the case that at least one of the initial and final mapping vectors is a dynamic mapping vector, generates instructions to the processor array to generate and execute a low cost transformation sequence subsequently when a defined value is assigned to the or each dynamic mapping vector.

The cost of a transformation sequence is determined by the time taken to execute that sequence.

Preferably the at least two transformation sequences are generated by calculating a mapping vector transformation sequence comprising one or more mapping vector element exchange or inversion cycles, and calculating at least two transformation sequences corresponding to the or each exchange or inversion cycle, the transformation sequences corresponding to the or each exchange or inversion cycle being individually costed and compared and the sequence or sequences of least cost being executed.

A class of data mappings in physical space correspond to 1-dimensional "Mapping Vectors" which define the position of data elements in terms of the order of the bits of their position determining indices. The use of mapping vectors in determining the position of data in multi-dimensional arrays is discussed in the inventor's paper published in IEEE TRANSACTIONS on Computers, Vol. C-31, No 9, September 1982, pp809-819. A pair of mapping vectors suffice to define uniquely an initial data ordering and the desired final ordering of data within the array. However there are a large number of data routings which achieve the desired transformation between the initial and final mappings. By taking only the initial and final mappings as defined by mapping vectors, automatically generating two or more sequences which produce the desired data reordering and costing the sequences using the relationships between different mapping vector operations and the time taken by the corresponding physical data reorderings in the array which will in general be known for a given array, the present invention enables even the most complex of data mappings to be performed at significantly increased speeds. Moreover the programming of a device operating in accordance with the method of the present invention is greatly simplified by the fact that the programmer only has to specify the desired data ordering and the device will automatically generate an efficient transformation sequence for achieving the desired ordering from a given initial ordering.

A method in accordance with the present invention is now described in detail with reference to the accompanying drawings, in which:-

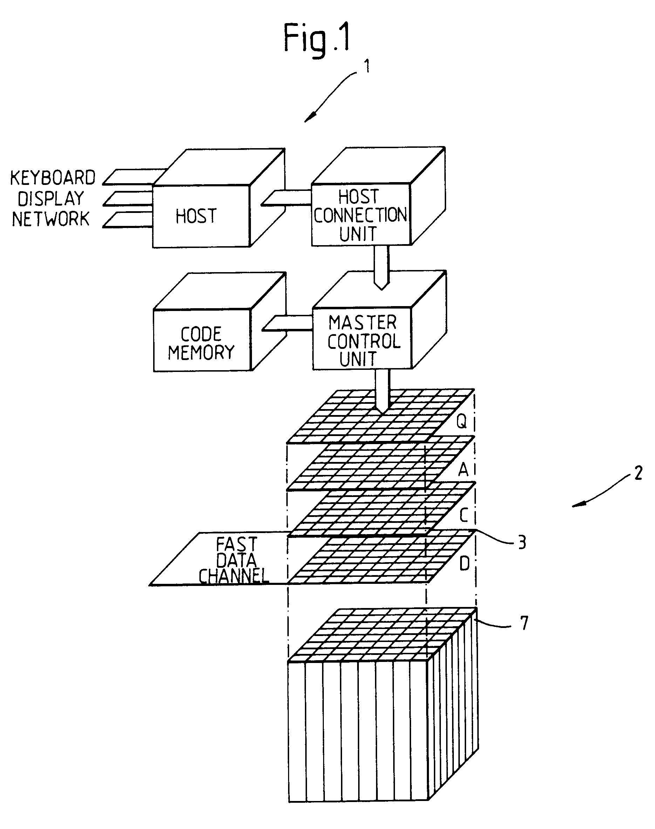

Figure 1 is a perspective block diagram illustrating a device suitable for use in a method in accordance with the present invention; and,

Figure 2 is a plan of an array used in such a device with the encircled region shown enlarged.

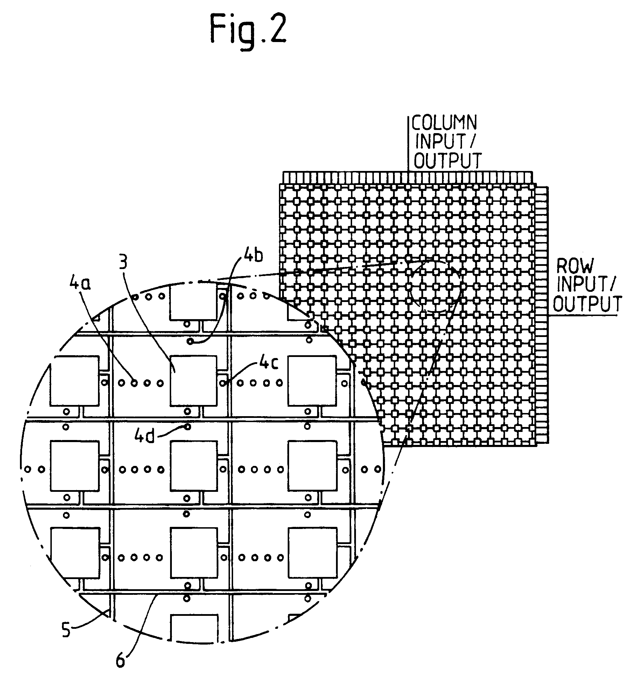

A system for use in a method in accordance with the present invention comprises a host processor 1 and a parallel processing multi-dimensional array 2. The array 2 may be a processor array having processing elements 3 arranged in a square array with local store 7 for each processing element providing a third dimension, the system employing an SIMD architecture. Such an array is described in GB-A-1445714. The array of processing elements includes an accumulator plane Q, an activity control plane A, a carry plane C and a data plane D. As shown in Figure 2, each element 3 is joined by connections 4A-4D to its four nearest neighbours. In addition each processor element 3 is connected to the data buses 5, 6 associated with each column and row of the array. The buses 5, 6 enable rapid broadcasting or fetching of data. An activity control unit A incorporated in each processor element 3 allows individual processor elements or groups of processors elements 3 to be switched off in response to appropriate control bits.

Although a particular array configuration is described the present invention is equally applicable to different arrays having different connectivities and it may, for example, be used with a stand alone array without a host processor.

The position of a data element in an array may be described by means of numerical indices, one index for each dimension of the array. A given routing of the data elements within the array may then be described in terms of the change in the position determining indices. Certain classes of data movement within the array can then be described in terms of an operation on the index of a general data element. Thus, for example, in the "Bit-Reversed" mapping the data element at the position having the binary index 001 is moved to the position with index 100, the element with index 110 is moved to position 011 and so on with a general element at position $B_2, B_1, B_0$ being moved to the location $B_0 B_1 B_2$ ($B_2, B_1, B_0$ being the bits of the binary location determining index). This transformation corresponds to the ordering in physical space -

(04261537).

It may alternatively be defined in terms of the ordering of the bits of the position determining indices as

( 0 1 2)

This latter vector which uniquely defines the particular physical mapping is a "Mapping Vector". Working in mapping vector space has the significant advantage that the information needed to describe a particular mapping is greatly reduced. There is a trade off in that there is a corresponding reduction in the number of physical mappings which can be defined in this way. However, the class of mappings which can be described are found to have a wide range of applications. This class is further extended by allowing the location of a data element to be formed from the inverses of index bits as well as the index bits themselves. For example, a mapping of eight items could be defined by taking the index bits in order and inverting just the most significant bit, $B_2$. This mapping is defined by the mapping vector.

(~2 1 0)

and corresponds to the physical mapping (45670123)

Mapping vectors are more formally defined and their properties discussed in greater detail in the paper cited above.

In a preferred embodiment of the present invention an initial ordering of data within the array processor 2 and a desired ordering of data are both defined as mapping vectors. These data orderings may, for example, correspond to the bit-ordering produced by a FFT and the natural bit ordering respectively. Given the initial and final mapping vectors the system automatically calculates transformation sequences which route the data within the array 2 so as to transform the initial mapping into the desired final mapping. The transformation sequences are calculated using three different strategies, each strategy being designed to provide a transformation sequence of low cost, but each strategy in general giving a different sequence of data movements. All these strategies first calculate the general description of the transformation of the mapping vectors in the form of a cyclic transformation and then go on to calculate a specific sequence of steps corresponding to each of these cyclic transformations. Each of these steps corresponds to a basic operation on a mapping vector such as an exchange of elements or the inversion of an element. These basic steps or "Generators" are easily implemented in the instruction set of the processor 2 as corresponding operations on the physical data in the array. The implementation is geared to the particular connectivity of the array and such features as the use of activity control units to enable selective merging of data. In general therefore the different transformation sequences are generated, costed, costs compared and the sequence of least cost chosen at compile-time. The individual generators of the transformation sequence are then executed at run time by parameterised calls to generator routines implemented in the processor's instruction set.

Tables 9 and 10 define suitable generator routines using FORTRAN-PLUS. This language which is based on FORTRAN with extensions suitable for parallel processors is defined in the publication "FORTRAN-PLUS Language", AMT publication man 002. Table 9 defines a number of functions which, for convenience, are used in the routines given in table 10 to define the generators themselves. The notation of the inventor's paper cited above is used, with a general array element denoted by $M_j^i$ where j identifies the dimension of the array and i identifies the bit-position within that dimension.

The first of the functions listed in table 9 produces a logical matrix with alternating groups of FALSE and TRUE rows or columns depending on whether the dimension, supplied as the second argument of the function, is 1 or 2. The base 2 logarithm of the number of rows or columns in each group is given by the first argument. The next function, SHFT forms a cyclic shift of a logical matrix along a specified dimension by a specified amount. The routine SWAP simply swaps the value of two logical matrices. The function INV performs the operation equivalent to inverting a planar mapping vector element but on one plane of data only.

Using the above functions the routines listed in table 10 define movements of data in the array corresponding to operations on mapping vectors such as the inversion of a given element or the exchange of elements in specified positions within mapping vectors.

In general for a given transformation of a mapping vector there are a number of alternative sequences of generators. The heuristics used to determine the appropriate sequencies are described in detail below.

Three strategies are used to determine the sequence of generators at compile time. The first step is common to all three strategies and is as follows:

From the two mapping vectors a description is produced of the steps required to go from the initial to the final mapping in an extended form of cycle notation. For example suppose that the initial mapping vector is:

(6 5 4 3 2 1 0)

and the final mapping vector is:

(5 ~ 64 2 1 0 3)

then the cycle-like form of the transformation would take the form:

(0 1 2 3) (5 ~6)

This is interpreted as follows, where it should be stressed that the numbers used in the cycle-like description refer to positions in the mapping vector and not to values:

the mapping vector element at position 0 goes to position 1;
the mapping vector element at position 1 goes to position 2;
the mapping vector element at position 2 goes to position 3;
the mapping vector element at position 3 goes to position 0;
the mapping vector element at position 5 goes to position 6;
the mapping vector element at position 6 is inverted and goes to position 5.

The algorithm to derive the cycle-like form of the transformation from the initial and final mapping vectors is as follows:

(a) From the initial and final mapping vectors form a "pair-list" which is a list of pairs of corresponding elements from the two mapping vectors. The pairs are in reverse order compared with order of the elements in the mapping vectors. In the above example the pair-list would have the form:

((0 3)(1 0)(2 1)(3 2)(4 4)(5 ~6)(6 5)).

(b) From the pair-list form a "triple list" by adding an index to each pair. In the above example the triple list is:

((0 0 3)(1 1 0)(2 2 1)(3 3 2)(4 4 4)(5 5 ~6)(6 6 5))

4

(c) The rest of the algorithm may be described by the following pseudo-code:

```
Initialise the list of cycles, LC, to be the empty
list ().
UNTIL the triple-list, TL, has no triples left:
    {Initialise the current cycle, C, to be the empty
    list ().
    Initialise TA to be the first triple in the
    triple-list, TL.
    WHILE there is a triple, TB, in TL whose 3rd
    element, TB[3] has the same value as TA[2]:
        {IF  the sign of TA[2] equals the sign of TB[3]
        THEN Append TA[1] to the end of the cycle C.
        ELSE Append ⌄TA[1] to the end of the cycle C.
        Set TA equal to the triple TB.
        Remove the triple TB from the triple-list TL.
        }
    Add the current cycle C to the list of cycles LC.
    }
```

The value of an element is the element with an "~" removed and the sign is "~" or null depending on whether or not the element begins with "~". Cycles which have no effect such as (4) are discarded.

The following alternative strategies are then applied to each cycle of the cycle-like form of the mapping transformation in turn to determine the optimum sequence of generators. They assume that an ordering of positions of mapping vector elements in terms of cost, i.e. the time taken for the associated data movement, is defined in which the order is determined principally by the amount of inter-processing element routing necessary when that element is inverted. Thus mapping vector element positions in the ADRS section of a mapping vector(i.e. those elements determining the address of a data element within the local store of a given processor element) are minimal according to this ordering since the movement of data in the dimension of the array corresponding to the local store elements is faster than in the other dimensions of the array. Conversely mapping vector elements in the ROW or COLUMN section (i.e. those elements determining the row or column number of the processor element in which a data element is held) have a higher value which increases further with the position number.

FIRST STRATEGY: this method first selects the minimum element in the cycle. If this element is denoted by "M" and the elements in the cycle before and after it are represented by X and Y, then the cycle is rewritten from its original form: "X M Y" to the "reduced" form "Y X". For a given cycle both X and Y may be null. Mapping vector exchanges are then performed between M and each of the elements of the reduced cycle in turn. A further refinement is introduced when some of the elements of the cycle are to be inverted. This makes use of the fact that if BOTH elements are inverted at the same time as they are exchanged then the corresponding data movement is similar to that when NEITHER are inverted and can therefore be done in the same time. Making use of this it is possible to arrange that all elements except possibly the element m are inverted as required at no extra cost in terms of execution time. For a cycle having an odd number of inversions the element m is explicitly inverted at the end. Choosing M to be the minimum element minimises the time for the exchanges as well as the final inversion.

To illustrate this strategy consider the cycle (0 1 2 3) from the above example and suppose that "2" is the minimum element, M. The reduced cycle is obtained as described above with X = 0 1 and Y = 3 and is the cycle (3 0 1). Thus exchanging M with the elements of the reduced cycle in turn gives rise to the generator sequence:

E(2;3) E(2;0) E(2;1).

The other cycle, assuming "5" to be the minimum element M, has a reduced cycle of (~6) and gives rise to the generator sequence:

E(5;6) I(5).

The effect of these generators in performing the mapping vector transformation is shown below (inversions not explicitly indicated):

```
          (6   5   4   3   2   1   0)
                          ^--^

                              ^------^
                              ^_-_^
              ^--^
          (5  ~6  4   2   1   0   3)
```

The algorithm may be described by the following pseudo code (where if X denotes an element which may begin with "~", then x denotes the same element without the "~"; similarly for M and m etc..):

```
BEGIN
        Rewrite the cycle:
        (<leading elements>M<trailing elements>)
        as
        (<trailing elements><leading elements>)
        If   M has the sign "~"
        THEN Set COIN = TRUE
        ELSE Set COIN = FALSE;
        FOR each cycle element, X, from first to last:
        {    IF   COIN
             THEN perform mapping vector exchange: E(~m;~x)
             ELSE perform mapping vector exchange: E(m;x);
             IF   X has the sign "~"
             THEN Set COIN = NOT(COIN);
        }
        IF   COIN
        THEN perform inversion I(m);
END
```

SECOND STRATEGY: this method first selects the pair of successive elements M(i) M(i + 1) in the cycle with the maximum cost when used as the two arguments of a mapping vector exchange. If the cycle is then denoted by:

⟨⟨leading elements⟩M(i) M(i + 1)⟨trailing elements⟩)

then the cycle is rewritten in the form:

(M(i + 1)⟨trailing elements⟩⟨leading elements⟩M(i))

Note that as in the first strategy such a cyclic shift does not alter the significance of the cycle. Mapping vector exchanges are then generated between each pair of successive cycle elements in turn starting from the end of the list. A similar strategy is applied to the inversion of elements as in the first strategy so that at most one inversion has to be performed with non-zero execution penalty. If this is necessary then it is so arranged that the inverted element will be the cheapest one to invert.

6

The algorithm may be described by the following pseudo code:

```
Rewrite the cycle:
(<leading elements>M(i) M(i+1)<trailing elements>)
as
(M(i+1)<trailing elements><leading elements>M(i))
FOR each pair of cycle elements (X,Y), from last to
first:
{    IF there are an odd number of inversions in the
     entire cycle AND Y is the element with minimum
     inversion cost
     THEN perform mapping vector inversion: I(y);
     IF  X begins with "∿"
     THEN perform mapping vector exchange: E(∿x;∿y)
     ELSE perform mapping vector excahnge: E(x;y);
}
IF there are an odd number of inversions in the
entire cycle AND M(i+1) is the element with minimum
inversion cost
THEN perform mapping vector inversion I(m(i+1))
```

THIRD STRATEGY: this method first selects the minimum element in the cycle. If this element is denoted by "M" and the elements in the cycle before and after it are denoted by X and Y, then the cycle is rewritten from its original form: "X M Y" to the "rewritten" form "M Y X". Mapping vector exchanges are then performed between an element, "ext", not in the cycle and each of the elements of the "rewritten" cycle in turn. The element "ext" is chosen as the minimum element of the whole mapping vector.

A similar strategy is applied to the inversion of elements as above so that at most one inversion has to be performed with non-zero execution penalty. If this is necessary then it is so arranged that the inverted element is "ext".

The algorithm may be described by the following pseudo code:

```
Rewrite the cycle:
(<leading elements>M<trailing elements>)
as
(M<trailing elements><leading elements>)
FOR each cycle element, X, from first to last:
{    IF X begins with "∿"
     THEN perform mapping vector exchange:E(∿ext;∿x)
     ELSE perform mapping vector exchange:E(ext;x)
}
IF there are an odd number of inversions in the
cycle
THEN perform inversion I(ext);
Perform mapping vector exchange: E(ext;m)
```

The use of the three strategies described above produces alternative transformation sequences corresponding to each cycle of the cyclic transformation. These alternative transformation sequences are costed and the sequence of lowest cost for each cycle chosen. A cost is evaluated in cycles per bit-plane processed for each mapping vector exchange or inversion and these costs are summed to give the total cost for each cycle. The evaluation of each individual cost includes a fixed overhead and an amount dependent on the inter-PE routing needed.

The costs of individual operations on the elements of a mapping vector in terms of cycles per bit-plane of data processed on a 32 x 32 DAP are as follows:

Inversion of a mapping vector element in the A-section costs 2;

Inversion of the mapping vector element at position x in the R-section, or at position x in the C-section costs 6, 8, 12, 20, and 18 for x = 0, 1, 2, 3 and 4 respectively;

Exchange of two mapping vector elements in the A-section costs 1;

Exchange of a mapping vector element anywhere in the A-section with an element at position x in the C-section or R-section costs 5, 6, 8, 12 and 14 for x = 0, 1, 2, 3, and 4 respectively;

Exchange of two mapping vector elements at positions x and y in the R-section (or of two mapping vector elements as positions x and y in the C-section) costs $(9 + 2^*(2^x - 2^y))$ where x and y are chosen so that x>y;

Exchange of a mapping vector element at a position x in the R-section (C-section) with one at position y in the C-section (R-section) costs:

35 when x = y = 4;

$(25 + 2^{y+1})$ when x = 4, and y<4;

$(9 + 2^*(2^x + 2^y))$ when x<4, and y<4.

In the above costings the A-section, C-section and R-section refer to the address, column and row sections respectively of the mapping vector.

The method of the above embodiment assumes that the form of the initial and final mapping vectors is known at compile-time. When this is not the case then an alternative method is used in which both of the mapping vectors are encoded as objects available to the program at run-time. These encoded forms of the mapping vectors are then used at run-time in order to determine which generators to invoke to perform the data transformation between them. The generators are invoked by parameterised calls to system-supplied routines.

In order to minimise the execution time used in determining the sequence of PDT generators to invoke, a single heuristic is used as follows. This heuristic is particularly well adapted for parallel processing. The routines embodying this heuristic therefore run efficiently on the array and further serve to minimise the cost of generating the transformation sequence at run-time. The run-time system performs the following action repeatedly until the initial mapping is transformed into the final mapping (during the transformation the initial mapping vector is updated to reflect changes in the mapping and is therefore referred to as the current mapping).

The elements are considered to be ordered in ascending order of the time required to perform a mapping vector inversion (note that this is directly related to the contribution of the element to the time required to perform an exchange involving that element). The first element (according to this ordering - i.e. the minimum element) whose initial position is different from its final position is exchanged with the element currently occupying its final position so that it is correctly positioned. This is done by invoking the appropriate PDT generator routine to operate on data in the array and updating the current mapping vector to reflect the change in mapping brought about by the application of the generator. If the element correctly positioned by this needs to be inverted then both it and the element with which it is exchanged are inverted (at no cost in execution time) at the same time as the exchange. If the latter element did not require inversion then this is corrected when it is correctly sited or as a single inversion if does not subsequently require resiting.

The algorithm may be described by the following pseudo code:

With the initial (current) and final mapping vectors in increasing order according to the time needed for their inversion:

```
UNTIL the current mapping vector equals the final
mapping vector:
BEGIN
        Select the first element, X in the current
        mapping vector which is different from the
        element in the same position in the final
        mapping vector.
        IF  X is the same as the element at the same
        position in the final mapping vector but with a
        different inversion
        THEN invoke a PDT routine to invert that
        element and update the current mapping vector
        to reflect the change due to the inversion.
        ELSE Exchange X with the element currently in
        its final position (If it has a different sign
        in the current and final mapping vectors then
        invert both elements as they are exchanged).
        Update the current mapping vector to reflect
        the changes due to the exchange and any
        inversion of elements.
    END
```

In the preferred embodiment the generators and the routines for costing the mapping vector transformations are implemented as libraries forming part of the system software for the processor 2. These routines are not in general accessed directly by the user. Instead software is provided which enables the user to define and manipulate data mappings using a suitably extended version of a high level language such as

9

FORTRAN PLUS.

Tables 1 to 6 list statements which extend FORTRAN PLUS. In the tables the statements are defined using BNF notation with the following conventions:

In the BNF grammar, identifiers in lower case or a mixture of lower and upper case are used for non-terminals. Identifiers entirely in upper case and other symbols are terminals with the following exceptions:

a group of one or more items enclosed in braces, {}, is optional;

the character * immediately after a non-terminal means that the non-terminal may be repeated;

the underline character is used to form names of non-terminals.

Different options for a construct appear on successive lines except where a line is a continuation of the previous option; such continuation lines begin with the character "-".

The extensions to FORTRAN PLUS set out in the tables provide a new data class corresponding to mapping vectors together with associated operators and certain predefined standard mappings. This new data class has two sub-classes: static mappings, which are known at compile-time, and dynamic mappings, which are undefined at compile-time. These two subclasses are analogous to constants and variables respectively.

Table 7 is a first example of a program in extended FORTRAN-PLUS which transforms a 1024 by 1024 matrix from crinkled to sheet mapping. This first program uses certain standard mapping types, "PLANAR" and "DEPTHFIRST-PLANAR" but equally it is possible for the user to define explicitly the desired mapping when this is known at compile time. The statements which use the extensions for handling mapping vectors rather than standard FORTRAN-PLUS expressions are preceded by the four characters "#PDT".

Table 8 lists a second program which uses explicitly defined static mapping vectors. The mapping vectors are defined using an extended form of the mapping vector notation used in the discussion above. In addition to a number indicating the sequential position of a bit each mapping vector element has an index indicating the dimension of the bit. Different dimensions correspond to, for example, row positions, column positions, or address within local store. In the notation used in the program the dimensional subscripts are preceded by the character $^{\wedge}$. An ascending or descending sequence of elements having the same dimensional index are shown as the first and last terms of the sequence separated by dots and followed by the appropriate index. The increment between successive terms of such a sequence is assumed to be $+1$ or $-1$ as appropriate.

The program shown in table 8 performs a perfect shuffle of an 8192 element integer vector VEC of precision IPREC on a 32 x 32 DAP. The first and second PDT statements define two mappings labelled "IDENTITY" and "SHUFFLED" respectively. The third PDT statement then remaps the data from the IDENTITY mapping to the SHUFFLED mapping.

As a first step in using such programs the program is entered on the host machine and a PDT preprocessor invoked. The PDT preprocessor runs on the host and translates the extended FORTRAN-PLUS program into standard FORTRAN-PLUS. The preprocessor functions typically by replacing the PDT statements by equivalent subroutine calls. The original PDT statements are reproduced as comments in the translated FORTRAN-PLUS program so that although they are not executed they appear in any listing. The translated code is then compiled using a conventional FORTRAN-PLUS compiler. Compilation results in the production of a number of modules which can call each other and also call PDT run-time routines held in a system library. These PDT run-time routines fall into three categories. Housekeeping routines are provided to manipulate mapping vectors stored as run-time objects. The second category comprises a number of automatic run-time routines of which the most important are those for the automatic generation of the parallel data transforms. The third class of routines are basic generator routines which move data in the array to effect the desired changes in a given mapping. The second class of routines generally operate by calling specific routines from the third class.

The run-time routines for the generation of parallel data transforms are used in those cases where dynamic mappings are involved and so the explicit form of the mapping vector is not known at compile time. By contrast when the mapping vector is static, that is it is explicitly known at compile time, then the pre-processor carries out the automatic costing when it translates the extended FORTRAN-PLUS code to the standard FORTRAN-PLUS code. After identifying the most efficient mapping the preprocessor produces calls which invoke the appropriate generator routines directly without use of the run-time costing routine. The preprocessor thus determines whether a mapping is static or dynamic and automatically generates, costs, and selects a suitable transformation sequence or produces a call for a run-time routine to generate a low cost transformation sequence according to the nature of the mapping. Since there is inevitably a time penalty to be paid for costing at run-time rather than at compile-time the operation of the pre-processor in this manner ensures that the run-time program is as efficient as possible.

EP 0 306 283 B1

After compilation the modules produced by the compiler together with the appropriate library modules are linked to form a single program which is then run in the processor array in the conventional manner.

Although the method of the present invention is described above in relation to one particular system architecture the method of the present invention may also be used with other architectures, such as a stand-alone processor array without a host processor. In this case steps such as compilation are carried out on the processor array itself.


<u>TABLE 1</u>


● Syntax of statements handling static mappings


```
MAP_stmt              ::= MAP smap_name = mapping_vector
                          MAP smap_name = dimensions standard_map
REMAP_stmt            ::= REMAP FROM=smap_name, TO=smap_name,
_                                     DATA=data_name, LENGTH=length
print_maps_stmt       ::= PRINT_MAP_TABLE
clear_maps_stmt       ::= CLEAR_MAP_TABLE


smap_name             ::= identifier
data_name             ::= identifier
dimensions            ::= [integer]
                          [integer,integer]
length                ::= int_expr
standard_map          ::= PLANAR
                          LINEAR
                          ALTERNATE
                          DEPTHFIRST_PLANAR
                          DEPTHFIRST_LINEAR
                          DEPTHFIRST_ALTERNATE
                          PLANAR_RM
                          ALTERNATE_RM
                          LINEAR_RM
                          DEPTHFIRST_PLANAR_RM
                          DEPTHFIRST_ALTERNATE_RM
                          DEPTHFIRST__LINEAR_RM
mapping_vector        ::= ({A: section |} C: section |R: section )
section               ::= static_mve*
static_mve            ::= {~}significance{^dimension}
significance          ::= intéger{...integer}
dimension             ::= integer
```

11

## TABLE 2

• Syntax of statements handling dynamic mappings

```
COMMON_MAP_stmt     ::= COMMON_MAP dmap_name { ,dmap_name }*
                        COMMON_MAP dmap_name = dimensions standard_map
                        COMMON_MAP dmap_name = mapping_vector
                        COMMON_MAP dmap_name = *
DECLARE_MAP_stmt    ::= DECLARE_MAP dmap_name { ,dmap_name }*
                        DECLARE_MAP dmap_name = dimensions standard_map
                        DECLARE_MAP dmap_name = mapping_vector
                        DECLARE_MAP dmap_name = *
DYNAMIC_REMAP_stmt  ::= DYNAMIC_REMAP FROM=dmap_name, TO=dmap_name,
                            DATA=data_name, LENGTH=length, matrices
COPY_MAP_stmt       ::= COPY_MAP FROM=dmap_name, TO=dmap_name
CLEAR_MAP_stmt      ::= CLEAR_MAP dmap_name


dmap_name           ::= identifier
matrices            ::= MATS=num_mats
                        LOG_MATS=log_mats
num_mats            ::= int_expr
log_mats            ::= int_expr
```

## TABLE 3

• Syntax of LET statements

```
LET_stmt            ::= LET dmap_name[selector] = dynamic_mve
                        LET int_variable    = dynamic_mve
                        LET int_variable    = scalar_fn


dynamic_mve         ::= {~}int_expr{^int_expr}
                        {~}dmap_name[selector]
                        *


scalar_fn           ::= qualifier dmap_name[selector]
                    ::= function int_expr
                    ::= INDEX_OF int_expr{^int_expr} IN dmap_name

qualifier           ::= INVERSION_OF
                        SIGNIFICANCE_OF
                        DIMENSION_OF
function            ::= LOG2_OF
                        POW2_OF
selector            ::= R:int_expr
                        C:int_expr
                        A:int_expr
                        RCA:int_expr
```

## TABLE 4

• Syntax of generator statements

```
WITH_stmt          ::= WITH DATA=data_name, LENGTH=length, matrices
-                      { CHANGE_MAP dmap_name }
-                      { generator* }
CHANGE_MAP_stmt    ::= CHANGE_MAP dmap_name { generator* }
generator_stmt     ::= generator*

generator          ::= exchange
                       inversion
exchange           ::= E(efield;efield)
inversion          ::= I(ifield)
ifield             ::= section_name: index
efield             ::= section_name: {~}index
index              ::= variable
                       integer{...integer}
```

## TABLE 5

• Syntax of COPY_DATA statement

```
COPY_DATA_stmt     ::= COPY_DATA FROM = data_name{PLANE int_expr},
-                      TO = data_name{PLANE int_expr},
-                      PLANES = bit_planes
-                      {, MASK = mask_expr}
-                      {, SHIFT = dirn_geom int_expr}
dirn_geom          ::= NC
                       EC
                       SC
                       WC
                       NP ,
                       EP
                       SP
                       WP
```

## TABLE 6

• Syntax of basic elements

```
int_expr              ::= int_variable
                          int_scalar
                          ( FORTRAN_PLUS_expression )
mask_expr             ::= logical_matrix_variable
                          ( FORTRAN_PLUS_logical_matrix_expression )
int_variable          ::= identifier
int_scalar            ::= identifier
                          integer
integer               ::= digit*
identifier            ::= alphabetic_char alphanumeric_or_underline_char*
```

## TABLE 7

```
#pdt  MAP SHEET    = [1024,1024] PLANAR
#pdt  MAP CRINKLED = [1024,1024] DEPTHFIRST_PLANAR
      SUBROUTINE SHEET_TO_CRINKLED(IMAGE)
      INTEGER*1 IMAGE(,,32,32)
#pdt  REMAP FROM=SHEET, TO=CRINKLED, DATA=IMAGE, LENGTH=8
      RETURN
      END
```

14

TABLE 8

```
#pdt   MAP IDENTITY = (A: 12...10 |C: 9...5 |R: 4...0)
#pdt   MAP SHUFFLED = (A: 11...9 |C: 8...4 |R: 3...0 12)
       SUBROUTINE SHUFFLE_8K(VEC, IPREC)
#pdt   REMAP FROM=IDENTITY, TO=SHUFFLED, DATA=VEC, LENGTH=IPREC
       RETURN
       END
```

TABLE 9

```
LOGICAL MATRIX FUNCTION AL (BIT,DIM)

IF (DIM .EQ. 1 ) AL = ALTR (2**BIT)

IF (DIM .EQ. 2) AL = ALTC (2**BIT)

RETURN

END



LOGICAL MATRIX FUNCTION SHFT (BITPLANE, SHIFT, DIM)

IF (DIM .EQ. 1) SHFT = SHNC (BITPLANE, SHIFT)

IF (DIM .EQ. 2) SHFT = SHWC (BITPLANE, SHIFT)

RETURN

END
```

15

## TABLE 9 Continued

```
SUBROUTINE SWAP (A,B)

LOGICAL A(,) , B(,)

TEMP = A

A = B

B = TEMP

RETURN

END




LOGICAL MATRIX FUNCTION INV (BITPLANE, BIT, DIM)

SHIFT = 2**BIT

IF (BIT .EQ. 5) GOTO 20

INV = MERGE( SHFT(BITPLANE,-SHIFT,DIM),SHFT (BITPLANE,SHIFT,DIM),

                     AL(BIT,DIM))

RETURN

20 INV = SHFT(BITPLANE,SHIFT,DIM)

RETURN

END
```

## TABLE 10

(1) <u>Inversion of Mapping Vector Element $m_{DIM}^{BIT}$ over the Data Set DATA</u>

```
      SUBROUTINE INVERT (DATA, PLANES, BIT, DIM)

      IF (DIM.EQ. 3) GOTO 3

      DO 20 I = 1, PLANES

   20 DATA (,,I) = INV (DATA(,,I),BIT,DIM)

      RETURN

    3 BP = 2**BIT

      DO 30 I = 1, PLANES, 2 * BP

      DO 30 J = I, I+ BP - 1


   30 CALL SWAP (DATA(,,J),DATA (,,J+BP))

      RETURN

      END
```

(2) <u>Vertical Exchange of Elements $m_3^{BIT1}$ and $m_3^{BIT2}$ (BIT1<BIT2)</u>

```
      SUBROUTINE X _ VERTICAL (DATA, PLANES, BIT1, BIT2)
      BP1 = 2 ** BIT1
      BP2 = 2 ** BIT2
      DO 20 I = 1, PLANES, 2 * BP2
      DO 20 J = I,I + BP2 - 1, 2 * BP1
      DO 20 K = J, J + BP1 - 1
   20 CALL SWAP (DATA (,,K + BP1), DATA (,, K+BP2))
      RETURN
      END
```

## TABLE 10 Continued

(3)  Planar-Vertical Exchange of Elements $m_{DIMP}^{BITP}$ and $m_3^{BITV}$

```
SUBROUTINE X _ PLANAR _ VERTICAL (DATA, PLANES, BITP, DIMP, BITV)

MASK = AL (BITP, DIMP)

BPV = 2 ** BITV

DO 20 I = 1, PLANES, 2 * BPV

DO 20 J = I, I + BPV - 1

TEMP = MERGE (DATA(,,J),DATA (,,J + BPV), MASK)

TEMP = INV (TEMP, BITP, DIMP)

DATA (MASK,J) = TEMP

20   DATA (.NOT. MASK, J + BPV) = TEMP

RETURN

END
```

(4)  Colinear Planar Exchange of $m_{DIM}^{BIT1}$ and $m_{DIM}^{BIT2}$ .  (BIT1<BIT2)

(a) Simple Method:

```
SUBROUTINE X_PLANAR (DATA,PLANES,BIT1,BIT2,DIM)

SHIFT = 2 ** BIT2 - 2 ** BIT1

MASK = AL(BIT1,DIM) .LNEQ. AL(BIT2,DIM)

DO 20 K=1, PLANES

20   DATA(MASK,K) = MERGE(SHFT(DATA(,,K), - SHIFT,DIM),SHFT(DATA(,,K),

                                  SHIFT,DIM), AL(BIT2,DIM))

RETURN

END
```

## TABLE 10 Continued

(b) Shift-merge-shift method:

```
SUBROUTINE X_PLANAR_SMS(DATA,PLANES,BIT1, BIT2, DIM)

MASK1 = AL(BIT1,DIM) .AND. .NOT. AL(BIT2,DIM)

MASK2 = .NOT. AL(BIT1, DIM) .AND. AL(BIT2,DIM)

SHIFT = 2**BIT2 - 2**(BIT1+1)

SHIFT1 = 2**BIT1

DO 20 K = 1, PLANES, 2

TEMP2 = MERGE(DATA(,,K+1),SHFT(DATA(,,K),-SHIFT1,DIM),MASK1)

TEMP = MERGE(DATA(,,K+1),SHFT(DATA(,,K),SHIFT1,DIM),MASK2)

TEMP = SHFT(TEMP,SHIFT,DIM)

DATA (MASK1,K) = TEMP

DATA (MASK1,K+1) = SHFT(TEMP,SHIFT1,DIM)

TEMP = SHFT (TEMP2, - SHIFT, DIM)

DATA (MASK2,K) = TEMP

20   DATA (MASK2, K+1) = SHFT(TEMP,-SHIFT1,DIM)

RETURN

END
```

TABLE 10 Continued

(c) Pipelined Method:

```
SUBROUTINE X_PLANAR_P(DATA,PLANES,BIT1,DIM1,BIT2,DIM2)

MASK = AL(BIT1,DIM1) .LNEQ. AL(BIT2, DIM2)

TEMP = INV(DATA(,,1),BIT1,DIM1)

DO 20 K = 2, PLANES,2

TEMP = MERGE(DATA(,,K),TEMP,MASK)

TEMP = INV(TEMP,BIT2,DIM2)

DATA(MASK,K-1) = TEMP

IF(K.LT.PLANES) TEMP = MERGE(DATA(,,K+1),TEMP,MASK)

TEMP = INV(TEMP,BIT1,DIM1)

20   DATA (MASK,K) = TEMP

RETURN

END
```

## Claims

1.  A method of operating a processor array system comprising reading an initial mapping vector defining an initial ordering of data in the array, reading a final mapping vector defining a desired ordering of data in the array, generating a transformation sequence, each step of the transformation sequence corresponding to a movement of data in the array corresponding to an operation on elements of a mapping vector, and executing a transformation sequence,

    characterised in that the processor array system comprises a host processor (1) and a processor array (2) and the host processor (1) reads the initial and final mapping vectors, determines whether each mapping vector is a static mapping vector having a known value or a dynamic mapping vector having a value to be determined subsequently, in the case that the initial and final mapping vectors are both static mapping vectors generates at least two mapping vector transformation sequences, costs the transformation sequences according to the time the corresponding data movement would take, identifies the transformation sequence of least cost, and generates instructions to the processor array (2) to execute the sequence of least cost,

    and in the case that at least one of the initial and final mapping vectors is a dynamic mapping vector, generates instructions to the processor array (2) to generate and execute a low cost transformation sequence subsequently when a defined value is assigned to the or each dynamic mapping vector.

2.  A method according to claim 1, in which the at least two transformation sequences are generated by calculating a mapping vector transformation sequence comprising one or more mapping vector element exchange or inversion cycles, and calculating at least two transformation sequences corresponding to the or each exchange or inversion cycle, the transformation sequences corresponding to the or each exchange or inversion cycle being individually costed and compared and the sequence or sequences of least cost being executed.

3. A method according to claim 1 or 2, in which the processor array generates the low cost transformation sequence by:

(a) identifying the first mapping vector element in the cost-ordered sequence of mapping vector elements of the initial mapping vector;

(b) comparing the said element with the correspondingly positioned element in the final mapping vector;

(c) if the said element and the correspondingly positioned element differ in sign then invoking generator routines to move data in the array to invert the said element and if the said element and the correspondingly positioned elements differ in value then invoking generator routines to move data in the array to exchange the said elements and the correspondingly positioned element;

(d) updating the initial mapping vector in accordance with the changes resulting from step (c);

(e) identifying the next mapping vector element in the cost-ordered sequence of mapping vector elements of the initial mapping vector; and,

(f) repeating steps (b) to (e) until the updated initial mapping vector is identical to the final mapping vector.

4. A method according to any one of claims 1 to 3, in which the initial and final mapping vectors are defined by instructions in a high-level language entered in the host processor, the host processor subsequently compiling the high-level instructions to produce instructions in a low-level language for the processor array, the method further comprising pre-processing the instructions in the high-level language prior to compiling, the step of pre-processing including generating a transformation sequence or instructions for the generation of a transformation sequence by the processor array at run-time according to whether the mapping vectors are static mapping vectors or dynamic mapping vectors respectively.

## Patentansprüche

1. Verfahren zum Betreiben eines Prozessor-Array-Systems, welches das Lesen eines anfänglichen Mapping-Vektors, der eine anfängliche Reihenfolge von Daten im Array definiert, Lesen eines abschließenden Mapping-Vektors, der eine gewünschte Reihenfolge von Daten im Array definiert, Erzeugen einer Transformationssequenz, wobei jeder Schritt der Transformationssequenz einer Bewegung von Daten im Array entsprechend einem Betrieb an Elementen eines Mapping-Vektors entspricht, und Ausführen einer Transformationssequenz umfaßt,

dadurch gekennzeichnet, daß das Prozessor-Array-System einen Hostprozessor (1) und ein Prozessor-Array (2) umfaßt, und der Hostprozessor (1) den anfänglichen und den abschließenden Mapping-Vektor liest, bestimmt, ob jeder Mapping-Vektor ein statischer Mapping-Vektor mit einem bekannten Wert oder ein dynamischer Mapping-Vektor mit einem anschließend zu bestimmenden Wert ist, in dem Fall, in dem der anfängliche und der abschließende Mapping-Vektor beide statische Mapping-Vektoren sind, zumindest zwei Mapping-Vektor-Transformationssequenzen erzeugt, die Kosten der Transformationssequenzen gemäß der Zeit, welche die entsprechende Datenbewegung benötigen würde, bewertet, die Transformationssequenz mit den Minimalkosten identifiziert, und Instruktionen an das Prozessor-Array (2) erzeugt, um die Sequenz mit den Minimalkosten auszuführen,

und in dem Fall, in dem zumindest einer des anfänglichen und des abschließenden Mapping-Vektors ein dynamischer Mapping-Vektor ist, Instruktionen an das Prozessor-Array (2) erzeugt, um anschließend eine kostengünstige Transformationssequenz zu erzeugen und auszuführen, wenn ein definierter Wert dem oder jedem dynamischen Mapping-Vektor zugeordnet wird.

2. Verfahren nach Anspruch 1, bei welchem zumindest zwei Transformationssequenzen durch das Berechnen einer Mapping-Vektor-Transformationssequenz mit einem oder mehreren Mapping-Vektorelement-Austausch- oder -Inversionszyklen, und Berechnen von zumindest zwei Transformationssequenzen entsprechend dem oder jedem Austausch- oder Inversionszyklus erzeugt werden, wobei die Kosten der dem oder jedem Austausch- oder Inversionszyklus entsprechenden Transformationssequenzen einzeln bewertet und verglichen werden, und die Minimalkostensequenz oder -sequenzen ausgeführt werden.

21

**3.** Verfahren nach Anspruch 1 oder 2, bei welchem das Prozessor-Array die kostengünstige Transformationssequenz erzeugt durch:

(a) Identifizieren des ersten Mapping-Vektorelements in der nach Kosten geordneten Sequenz von Mapping-Vektorelementen des anfänglichen Mapping-Vektors;

(b) Vergleichen des genannten Elements mit dem entsprechend positionierten Element im abschließenden Mapping-Vektor;

(c) wenn das genannte Element und das entsprechend positionierte Element ein unterschiedliches Vorzeichen aufweisen, Aufrufen von Generatorroutinen zur Bewegung von Daten im Array, um das genannte Element zu invertieren, und, wenn das genannte Element und das entsprechend positionierte Element einen unterschiedlichen Wert aufweisen, Aufrufen von Generatorroutinen zum Bewegen von Daten im Array, um die genannten Elemente und das entsprechend positionierte Element auszutauschen;

(d) Aktualisieren des anfänglichen Mapping-Vektorelements in Übereinstimmung mit den aus Schritt (c) resultierenden Änderungen;

(e) Identifizieren des nächsten Mapping-Vektorelements in der nach Kosten geordneten Sequenz von Mapping-Vektorelementen des anfänglichen Mapping-Vektors; und

(f) Wiederholen der Schritte (b) bis (e), bis der aktualisierte anfängliche Mapping-Vektor mit dem abschließenden Mapping-Vektor identisch ist.

**4.** Verfahren nach einem der Ansprüche 1 bis 3, bei welchem der anfängliche und der abschließende Mapping-Vektor durch Instruktionen in einer in den Hostprozessor eingegebenen problemorientierten Sprache definiert sind, wobei der Hostprozessor anschließend die problemorientierten Instruktionen kompiliert, um Instruktionen in einer maschinenorientierten Sprache für das Prozessor-Array vorzusehen, welches Verfahren ferner die Vorverarbeitung der Instruktionen in der problemorientierten Sprache vor dem Kompilieren umfaßt, wobei der Schritt der Vorverarbeitung das Erzeugen einer Transformationssequenz oder von Instruktionen zur Erzeugung einer Transformationssequenz durch das Prozessor-Array zur Laufzeit beinhaltet, je nachdem, ob die Mapping-Vektoren statische Mapping-Vektoren oder dynamische Mapping-Vektoren sind.

## Revendications

**1.** Procédé de fonctionnement d'un système de réseau de processeurs comprenant la lecture d'un vecteur de mappage initial définissant un classement initial de données dans le réseau, la lecture d'un vecteur de mappage final définissant un classement souhaité de données dans le réseau, la génération d'une séquence de transformation, chaque étape de la séquence de transformation correspondant à un déplacement de données dans le réseau correspondant à une opération sur des éléments d'un vecteur de mappage, et l'exécution d'une séquence de transformation,

caractérisé en ce que le système de réseau de processeurs comprend un processeur hôte (1) et un réseau de processeurs (2) et le processeur hôte (1) lie les vecteurs de mappage initial et final, détermine lequel des deux vecteurs de mappage est un vecteur de mappage statique présentant une valeur connue ou un vecteur de mappage dynamique présentant une valeur qui doit être déterminée ensuite, dans le cas où les vecteurs de mappage initial et final sont tous deux des vecteurs de mappage statiques, il génère au moins deux séquences de transformation de vecteur de mappage, il établit le coût des séquences de transformation en relation avec le temps que le déplacement de données correspondantes prendrait, il identifie la séquence de transformation de moindre coût et il génère des instructions pour le réseau de processeurs (2) afin qu'il exécute la séquence de moindre coût ; et

en dans le cas où au moins l'un des vecteurs de mappage initial et final est un vecteur de mappage dynamique, il génère des instructions pour le réseau de processeurs (2) afin de générer et d'exécuter une séquence de transformation de moindre coût ensuite lorsqu'une valeur définie est assignée au vecteur de mappage dynamique ou à chaque vecteur de mappage dynamique.

**2.** Procédé selon la revendication 1, dans lequel les au moins deux séquences de transformation sont générées en calculant une séquence de transformation de vecteur de mappage comprenant un ou plusieurs cycles de permutation ou d'inversion d'éléments de vecteurs de mappage et le calcul d'au moins deux séquences de transformation correspondant au cycle de permutation ou d'inversion ou à chaque cycle de permutation ou d'inversion, les séquences de transformation correspondant au cycle de permutation ou d'inversion ou à chaque cycle de transformation ou d'inversion faisant individuellement l'objet d'une estimation quant au coût et étant comparées à la séquence ou aux séquences de moindre coût qui sont exécutées.

3. Procédé selon la revendication 1 ou 2, dans lequel le réseau de processeurs génère la séquence de transformation de moindre coût en :

(a) identifiant le premier élément de vecteur de mappage selon la séquence classée en fonction du coût d'éléments de vecteur de mappage du vecteur de mappage initial ;

(b) comparaison dudit élément avec l'élément positionné en correspondance dans le vecteur de mappage final ;

(c) si ledit élément et l'élément positionné en correspondance diffèrent du point de vue du signe, alors appel à des sous-programmes de générateur pour déplacer des données dans le réseau afin d'inverser ledit élément et si ledit élément et les éléments positionnés en correspondance diffèrent du point de vue de la valeur, alors appel à des sous-programmes de générateur afin de déplacer les données dans le réseau afin de permuter lesdits éléments et l'élément positionné en correspondance ;

(d) mise à jour du vecteur de mappage initial en relation avec les modifications résultant de l'étape (c) ;

(e) identification de l'élément de vecteur de mappage suivant selon la séquence classée en fonction des coûts d'éléments de vecteur de mappage du vecteur de mappage initial ; et

(f) répétition des étapes (b) à (e) jusqu'à ce que le vecteur de mappage initial mis à jour soit identique au vecteur de mappage final.

4. Procédé selon l'une quelconque des revendications 1 à 3, dans lequel les vecteurs de mappage initial et final sont définis par des instructions dans un langage de niveau supérieur entrées dans le processeur hôte, le processeur hôte compilant ensuite les instructions de niveau supérieur pour produire des instructions dans un langage de niveau inférieur pour le réseau de processeurs, le procédé comprenant en outre un prétraitement des instructions dans le langage de niveau supérieur avant compilation, l'étape de prétraitement incluant une génération d'une séquence de transformation ou d'instructions de transformation pour la génération d'une séquence de transformation au moyen du réseau de processeurs lors du déroulement des instructions en fonction de si oui ou non les vecteurs de mappage sont respectivement des vecteurs de mappage statiques ou des vecteurs de mappage dynamiques.

# Fig.1

# Fig.2

COLUMN
INPUT /
OUTPUT

ROW
INPUT/
OUTPUT

4b

3

4a

4c

4d

5

6